# EUROPEAN PATENT APPLICATION

(11) **EP 1 020 281 A1**
(43) Date of publication of application: **19.07.2000**
(21) Application number: 98900377.7
(22) Date of filing: 16.01.1998
(51) Int. Cl.: B29C 49/22, B32B 1/02, B32B 27/30

(54) **MULTILAYER BLOW-MOLDED BODY HAVING EXCELLENT ABRASION-RESISTANCE**

(30) Priority: 21.01.1997 JP 892897
(71) Applicant: Nippon Steel Chemical Co., Ltd., Shinagawa-ku, Tokyo (JP); NIPPON STEEL CORPORATION, Tokyo 100-71 (JP)
(72) Inventor: ANDOH, Hideki, Kisarazu-shi, Chiba 292 (JP)
(74) Representative: Whalley, Kevin
(86) International application number: JP9800125
(87) International publication number: WO9831528

(57) **Abstract**

Provided are a multilayer blow molded article comprising two or more layers, wherein a resin constituting an outermost layer has a larger Rockwell hardness than that of a resin constituting an inner layer, and the outer surface thereof satisfies at least one of the surface characteristics of a surface roughness of 0.2 µm or less defined by a center line-average roughness (Ra) or a 60° specular glossiness of 60 % or more, and a multilayer blow molded article comprising two or more layers, wherein a resin constituting an outermost layer is divided into two kinds of different resins at a parting surface of a mold, and a resin constituting a front side outermost layer has a larger Rockwell hardness than that of a resin constituting a back side outermost layer.

## Description

### Technical Field

The present invention relates to a multilayer blow molded article, and though shall not specifically be restricted, to a multilayer blow molded article having excellent abrasion resistance and good surface appearance at the same time, which is suitably used, for example, for household electric appliances such as refrigerators. water-related articles such as washhand toilet stands, sinks and bathtubs, and industrial parts such as automobile outside plates and trims.

### Background Art

In blow molding of a thermoplastic resin, basically vessel-shaped molded articles such as PET bottles and automobile fuel tanks have been molded in a main stream. In recent years, however, interest in so-called double wall products obtained by flattening cylindrical parisons have been grown.

Surface appearance and dimensional accuracy which are equivalent to those of injection-molded articles are requested from such products in many cases. However, polyolefin based resins such as HDPE and PP which have so far been used for large-sized blow molded articles have had the defect that it is difficult to apply to such uses in terms of the points that the satisfactory surface evenness and dimensional accuracy can not be obtained in blow molding due to the large crystallinity and the rapid crystallization rate thereof and that it is difficult to paint since they do not have polar groups or reactive functional groups in molecules and are poor in solubility in solvents.

Thus, in recent years, attentions are paid to blow molded articles using polystyrene based resins represented by an ABS (acrylonitrile/butadiene/styrene copolymer) resin as a resin which provides more excellent surface appearance than that of polyolefin based resins and has good paint applicability. A rear spoiler and the like using an ABS resin can be given as an example of uses related to automobiles (Plastic Age, vol. 12, p. 125 to 129, 1994).

In general, when it is used for such purpose, blow molded articles of ABS resins have to be subjected to paint finishing via a polishing process. The polishing process is required because the blow molded articles have usually poor surface evenness, and the paint finishing is required because the ABS resin has as low surface hardness as to be scratched and does not have satisfactory weatherability. In such production process, however, a rise in the production cost due to an increase in the number of the steps can not be avoided. Further, the painted articles are disadvantageous in terms of recycling since a technique for peeling the paint films has not yet been established.

For the purpose of solving such problem, proposed is a method in which a colorant is added to an ABS resin and molded articles of the ABS resin is subjected to a specular polishing process, followed by being covered with a transparent paint film (Japanese Patent Application Laid-Open No. 8-11753). However, the problem described above does not come to be basically solved. Further, proposed is a paintless process which is actualized by changing the melt indices of the resins used for the inner and outer layers which are formed with making use of a multilayer blow molding technique (Japanese Patent Application Laid-Open No. 8-119043). However, without further processing the surface hardness is low and the weatherability is unsatisfactory.

Not only a reduction in a production cost but also problems of environment and recycle grow serious at present, and therefore it is very important in view of meeting social needs to develop double wall products which are paintless and excellent in surface hardness and surface appearance.

Accordingly, in light of such circumstances, an object of the present invention is to solve conventional problems and provide a double wall product which is paintless but excellent in abrasion resistance, surface flatness and weatherability and has an excellent balance of rigidity with impact resistance as a structural member and which makes it possible to reuse the scraps produced in the production process and the recycled resins for the products, that is, sufficiently meets a closed loop recycle.

### Disclosure of the Invention

Intensive researches repeated by the present inventor in order to solve the problems described above have resulted in finding that abrasion resistance on the surface of a paintless molded article can be improved by setting a Rockwell hardness of a resin constituting the outermost layer higher than that of a resin constituting the inner layer in a multilayer blow molding and that a suitable combination of resins can solve problems on the weatherability, the mechanical properties and the recyclability, and thus the present invention have been completed.

That is, the first invention of the present application relates to a multilayer blow molded article comprising at least two or more layers, wherein a resin constituting the outermost layer has a larger Rockwell hardness (based on ASTM-D785 or JIS-K7202) than that of a resin constituting the inner layer, and the outer surface thereof satisfies at least one of the surface characteristics of a surface roughness of 0.2 µm or less defined by a center line-average roughness (Ra) of JIS-B0601 and a 60° specular glossiness of 60 % or more defined by JIS-K7105.

The second invention of the present application relates to a multilayer blow molded article comprising at least two or more layers, wherein the resin constituting the outermost layer is divided into two kinds of different resins at a parting surface of a mold, and a resin constituting the front side outermost layer thereof has a larger Rockwell hardness than that of a resin constituting the back side outermost layer.

In the multilayer blow molded article of the present invention, the resin having a larger Rockwell hardness is characterized by a resin selected from methacryl resins, copolymers comprising methyl methacrylate as one constitutional component, acryl resins and copolymers comprising acrylonitrile as one constitutional component, and the resin having a smaller Rockwell hardness is characterized by a resin selected from ABS resins, AES resins, HIPS resins and analogues thereof.

Further, another invention of the present application relates to a multilayer blow molded article comprising at least three or more layers, wherein a resin constituting the outermost layer is a transparent thermoplastic resin; a resin constituting the intermediate layer is a thermoplastic resin which is colored and/or contains various additives and which has good miscibility with the transparent thermoplastic resin described above; and a resin constituting at least one layer of the intermediate layer and the inner layer excluding the outermost layer is scrapped resins produced in molding and recycled resins of articles concerned.

### Brief Description of the Drawings

Fig. 1 is a perspective drawing of the appearance of a multilayer blow molded article obtained in Example 4.
Fig. 2 is a cross section of a parison used in Example 4.

### Best Mode for Carrying Out the Invention

The present invention shall be explained below in further detail.

The Rockwell hardness specified in the present invention is an index for hardness of plastics and is provided by ASTM-D785 or JIS-K7202. To be specific, using a steel ball having a prescribed diameter (12.7 mm or 6.35 mm) as an indenter, a standard load of 10 kgf is first applied. Then a test load of 60 or 100 kgf is applied, and difference h (mm) in a penetration depth of the indenter observed when returned again to the standard load is determined. The Rockwell hardness is shown by a value calculated from an equation (130 - 500h). Characteristic hardness marks are provided according to a combination of the test load and the kind of the indenter, and they are called a scale:

| Scale | Test load | Indenter |
|---|---|---|
| R | 60 kgf | steel ball having a diameter of 12.7 mm |
| L | 60 kgf | steel ball having a diameter of 6.35 mm |
| M | 100 kgf | steel ball having a diameter of 6.35 mm |

The test condition becomes severer in the order of M>L>R, and therefore used are an M scale for a resin having a large hardness, an L scale for a resin having a medium hardness and an R scale for a resin having a small hardness.

The Rockwell hardness of the resin constituting the outermost layer or the front side outermost layer shall not specifically be restricted in the present invention as long as it is larger than the Rockwell hardness of the resin constituting the inner layer or the back side outermost layer and can be selected in a range of 80 to 110, preferably 90 to 110 in terms of the L scale. The larger the Rockwell hardness is preferred from the viewpoint of abrasion resistance, however if it exceeds 110 in terms of the L scale, the resin is notably reduced in impact resistance and tends to be unsuitable for using for a structural member. On the other hand, the Rockwell hardness of less than 80 in terms of the L scale tends to be unsatisfactory in terms of the abrasion resistance which is the object of the present invention.

The Rockwell hardness of the resin constituting the inner layer or the back side outermost layer shall not specifically be restricted in the present invention as long as it is smaller than the Rockwell hardness of the resin constituting the outermost layer or the front side outermost layer and can be selected in a range of 50 to 90, preferably 50 to 80 in terms of the L scale. If it exceeds 90 in terms of the L scale, it tends to be difficult to allow the impact resistance to be compatible with the surface hardness, which is the object of the present invention. On the other, if the Rockwell hardness is less than 50 in terms of the L scale, the rigidity as a structural member tends to be short.

The outermost layer of the multilayer blow molded article of the present invention may be either constituted from one kind of material or two kinds of materials divided at the parting surface of a mold. Particularly in the latter case, it is possible and very effective to use a thermoplastic resin having large surface hardness, that is, high abrasion resistance for the front side outermost layer of the article and to use a thermoplastic resin having high impact resistance for the back side outermost layer of the article. The reason thereof is that in the case of the double wall article targeted in the present invention, nuts and fittings for mounting are usually inserted into the back side outermost layer of the article and that in such case, a material having high surface hardness has low impact resistance and is not sufficient in strength for providing the nuts and fittings described above and therefore is hardly used for the back side outermost layer of the article.

The thermoplastic resin used for the outermost layer or the front side outermost layer of the multilayer blow molded article of the present invention includes methacryl resins, copolymers comprising methyl methacrylate as one constitutional component, acryl resins and copolymers comprising acrylonitrile as one constitutional component. To be specific, examples thereof include a PMMA resin (polymethyl methacrylate), an MS resin (methyl methacrylate-styrene copolymer) and an AS resin (acrylonitrile-styrene copolymer), and they can be used alone or in a mixture of two or more kinds thereof. Preferably, these resins used for the outermost layer or the front side outermost layer are colored or transparent thermoplastic resins and have good miscibility with the resins constituting the inner layer or the intermediate layer or the back side outermost layer which shall be explained below.

The thermoplastic resin used for the inner layer or the back side outermost layer of the multilayer blow molded article of the present invention includes an ABS resin (acrylonitrile-butadiene-styrene copolymer), an MBS resin (methyl methacrylate-butadiene-styrene copolymer), an AES resin (acrylonitrile-ethylene-styrene copolymer) and an HIPS resin (high impact polystyrene). They can be used alone or in a mixture of two or more kinds thereof.

Different kinds of various thermoplastic resins in addition to the resins described above may suitably be mixed with the thermoplastic resins used for the multilayer blow molded article of the present invention. Examples of the thermoplastic resins used for such purpose include PE (polyethylene), PP (polypropylene), polyethylene-polypropylene copolymers, EPR (ethylene-propylene rubber), EVA (ethylene-vinyl acetate copolymer), PVC (polyvinyl chloride), polyacetal, PS (polystyrene), SBS (styrene-butadiene-styrene copolymer), SEBS (styrene-ethylene-butylene-styrene copolymer), PET (polyethylene terephthalate), PBT (polybutylene terephthalate), PC (polycarbonate), various PA (polyamide), PPE (polyphenylene ether), modified PPE, PAR (polyallylate), PPS (polyphenylene sulfide), polysulfone, PES (polyether sulfone), PEK (polyether ketone), PEEK (polyether ether ketone), thermoplastic PI (polyimide) and thermoplastic fluororesins, but they shall by no means be restricted thereby.

Resinous components other than thermoplastic resins, elastomers, pigments, organic/inorganic fillers and various additives may be added, if necessary, to the thermoplastic resins used for the multilayer blow molded article of the present invention as long as they do not deviate from the purpose of the present invention. Among them, the organic/inorganic fillers used for the purpose of providing the molded article with rigidity may be any of tabular, granular or fibrous ones.

To be specific, the tabular or granular fillers include various metal powders (aluminum powder and the like), metal oxides (magnesium oxide, titanium oxide, alumina and the like), metal hydroxides (magnesium hydroxide, aluminum hydroxide and the like), carbonates and sulfates (calcium carbonate, magnesium carbonate, barium sulfate and the like), synthetic silicates (magnesium silicate, aluminum silicate and the like), natural silicates (talc, mica, kaolin and the like), silicon carbide powder, synthetic and natural silica, carbon black, wooden powder, and cotton powder.

The fibrous fillers include synthetic polymer fibers (nylon, PET fiber, aramide fiber, Teflon fiber and the like), natural high molecular fibers (wool, cotton, pulp and the like), glass fibers, carbon fibers (carbon whisker, graphite fiber and the like), ceramic fibers (silica·alumina fiber, potassium titanate fiber, asbestos fiber and the like), silicon carbide fiber/whisker, and metal fibers (boron fiber, steel fiber, aluminum fiber and the like).

Further, various additives include plasticizers, flame-retardants, heat stabilizers, antioxidants, light stabilizers, UV-absorbers, lubricants, antistatic agents, mold releasing agents, foaming agents, nucleating agents, colorants, cross-linking agents, and dispersion aids.

A layer structural ratio of the outer layer resin to the inner layer resin shall not specifically be restricted and is usually selected preferably in a range of from 1/20 to 1/1 of an outer layer thickness/inner layer thickness. In a range of <1/20 of the outer layer thickness/inner layer thickness, the inner layer material having a small Rockwell hardness exerts too large influence, so that the abrasion resistance is liable to be unsatisfactory. On the other hand, in a range of >1/1 of the outer layer thickness/inner layer thickness, the outer layer material having a large Rockwell hardness has a high structural ratio, so that the impact strength is lowered, which tends to be unsuitable as a structural material.

The multilayer blow molded article of the present invention is characterized by that the outer surface thereof satisfies at least one of the surface characteristics of a surface roughness of 0.2 µm or less defined by a center line-average roughness (Ra) of JIS-B0601 and a 60° specular glossiness of 60 % or more defined by JIS-K7105. Such molded article can be produced by setting the surface temperature of a mold higher than DTUL (deflection temperature under load) of the resin used for the outermost layer at the time of blowing air in blow molding to transfer the glossy surface and then lowering the surface temperature of the mold than the DTUL of the resin described above to be cooled and solidified thereby to be taken out in the form of a product.

The DTUL (deflection temperature under load) specified here is an index of heat resistance of a plastic and is prescribed by ASTM D-648. To be specific. the DTUL is defined by a temperature observed when the deflection caused by the load comes up to 0.254 mm, wherein a test piece having a length of 127 mm, a width of 12.7 mm and a thickness of 6.4 mm is put on a supporting base having a distance of 100 mm between supporting points; a bending stress of 18.5 kgf/cm² is applied to the center; and the temperature is elevated at 2°C/minute.

Capable of being used as the material of the mold used in the molding method described above are materials usually used for molding thermoplastic resins, such as iron or steel comprising iron as a main component, aluminum or alloys comprising aluminum as a main component and zinc alloys.

Further, another method of obtaining the multilayer blow molded article having the surface characteristics prescribed in the present invention includes a method in which the surface of the mold described above is covered with a material having a low thermal conductivity for the purpose of preventing the molten resin from being quenched to improve the transferring property on the surface of the mold. Suitably used as the material having a low thermal conductivity used for such purpose are various silicate compounds including glass, ceramics. thermosetting resins represented by an epoxy resin, fluororesins and polyimide resins. Among them, aromatic polyimide resins which are soluble in organic solvents are suitably used from the viewpoints of durability and easy processing.

Such soluble polyimide resins shall by no means be restricted in a chemical structure thereof as long as they can be dissolved in a solvent such as m-cresol, tetrachloroethane, N-methyl-2-pyrrolidone and N,N-dimethylacetamide at a concentration of 10 to 30 % by weight, but they have to have a higher glass transition point than the molding temperatures (melting temperatures) of the thermoplastic resins to be molded. The polyimide resins having such a structure include polyimide resins into which crooked structures are introduced by using aromatic diamines such as 3,3'-diaminodiphenyl ether, 3,3'-diaminodiphenylmethane, 3,3'-diaminobenzophenone, 9,9-bis(3-methyl-4-aminophenyl)fluorene, 9,9-bis(3-ethyl-4-aminophenyl)fluorene and 9,9-bis(4-aminophenyl)fluorene, and polyimide resins into which bulky substituents are introduced by using tetracarboxylic dianhydrides such as 2,2-bis(3,4-biscarboxyphenyl)-1,1,1,3,3,3-hexafluoropropane dianhydride and various phenyl group-substituted acid anhydrides.

Further, another material may be laminated for the purpose of further improving the durability and the surface smoothness of the low heat conductive material as long as the heat insulating effect of the low heat conductive material is not damaged, and the improvement includes, for example, painting of various hard coating agents of silicone base, epoxy acrylate base and urethane acrylate base, various metal plating, and vapor deposition and flame coating of metals, metal oxides and ceramics.

In the multilayer blow molded article of the present invention comprising three or more layers, the transparent thermoplastic resin constituting the outermost layer has to have good miscibility with the thermoplastic resin constituting the intermediate layer, and examples of the resin satisfying such a condition includes combinations described in the following Table 1 but shall by no means be restricted to them.

**Table 1**

| No. | Outermost layer resin | intermediate layer resin |
|---|---|---|
| 1 | PMMA | ABS |
| 2 | PMMA | AES |
| 3 | MS | HIPS |
| 4 | MS | ABS |
| 5 | MS | AES |
| 6 | AS | HIPS |
| 7 | AS | ABS |
| 8 | AS | AES |
| 9 | PC | ABS |
| 10 | PET | PC |

### Examples

The present invention shall specifically be explained below with reference to examples.

The following multilayer blow molding machine, mold and evaluation conditions of physical properties are used in the examples.

### 〈Multilayer blow molding machine〉

Molding machine: multilayer blow molding machine NB120S manufactured by the Japan steel works, Ltd. (clamping force: 120 tonf)
   General multilayer (3 kinds, 3 layers)
Extruder: inner layer 90 mm⌀, intermediate layer 50 mm⌀ and outer layer 65 mm⌀
   Special multilayer (4 kinds, 3 layers)
Extruder: inner layer 90 mm⌀, intermediate layer 50 mm⌀, outer layer (1) 65 mm⌀ and outer layer (2) 65 mm⌀

### 〈Mold〉

Product form: 700 × 450 × 20 mm plate
Cavity surface: specular finishing: Ra<0.1 µm

### 〈Evaluation conditions〉

- Interlayer peeling: after multilayer blow molding, the presence of peeling between layers such as outer layer/intermediate layer, intermediate layer/inner layer and outer layer/inner layer was confirmed with eyes (○: no peeling, X: peeling)
- Recyclability: shown by a ratio of an Izod impact value of a crushed scrap material to that of a matrix material (the case of Example 4: Izod impact value of a crushed scrap material/Izod impact value of ABS)
- Pencil hardness: carried out at a test load of 1000 kgf based on JIS-K5400
- Surface roughness: center line-average roughness, Ra (µm) based on JIS-B0601
- Glossiness: based on 60° specular glossiness (%) of JIS-K7105

The material formations of the multilayer blow molded articles prepared in the examples and the comparative examples are shown in Table 2.

### Example 1

Selected were a PMMA resin ( 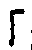 Sumipex K503 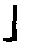 manufactured by Sumitomo Chemical Co., Ltd.; Rockwell hardness in L scale: 97) as an outer layer resin and an ABS resin ( 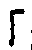 Cycolac EX270 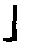 manufactured by Ube Cycon, Ltd.; Rockwell hardness in L scale: 77) as an inner layer resin to carry out multilayer blow molding under the molding conditions of a molding temperature of 220°C and a blowing pressure of 0.6 Mpa.

The molding result is shown in Table 3.

### Example 2

Selected were an MS resin ( 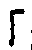 Esthylene MS300 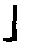 manufactured by Nippon Steel Chemical Co., Ltd.; Rockwell hardness in L scale: 97) as an outer layer resin and an HIPS resin ( 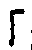 Esthylene HL1 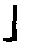 manufactured by Nippon Steel Chemical Co., Ltd.; Rockwell hardness in L scale: 60) as an inner layer resin to carry out multilayer blow molding under the molding conditions of a molding temperature of 200°C and a blowing pressure of 0.6 Mpa.

The molding result is shown in Table 3.

### Example 3

Selected were a PMMA resin (acryl resin 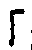 Sumipex K503 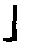 manufactured by Sumitomo Chemical Co., Ltd.; Rockwell hardness in L scale: 97) as a front side outer layer resin, an ABS resin ( 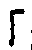 Cycolac EX270 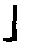 manufactured by Ube Cycon, Ltd.; Rockwell hardness in L scale: 77) as a back side outer layer resin and an AES resin ( 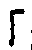 Cycolac SE40 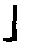 manufactured by Ube Cycon, Ltd.; Rockwell hardness in L scale: 70) as an inner layer resin to carry out multilayer blow molding in the same manner as in Example 1.

The molding result is shown in Table 3.

### Example 4

Selected were a PMMA resin (acryl resin 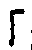 Sumipex K503 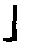 manufactured by Sumitomo Chemical Co., Ltd.; Rockwell hardness in L scale: 97) as a front side outer layer resin, an ABS resin ( 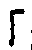 Cycolac EX270 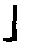 manufactured by Ube Cycon, Ltd.; Rockwell hardness in L scale: 77) as back side outer layer and intermediate layer resins and a crushed resin (PMMA/ABS; Rockwell hardness in L scale: 81) of scraps produced in molding in Example 1 as an inner layer resin to carry out multilayer blow molding in the same manner as in Example 1.

The molding result is shown in Table 3.

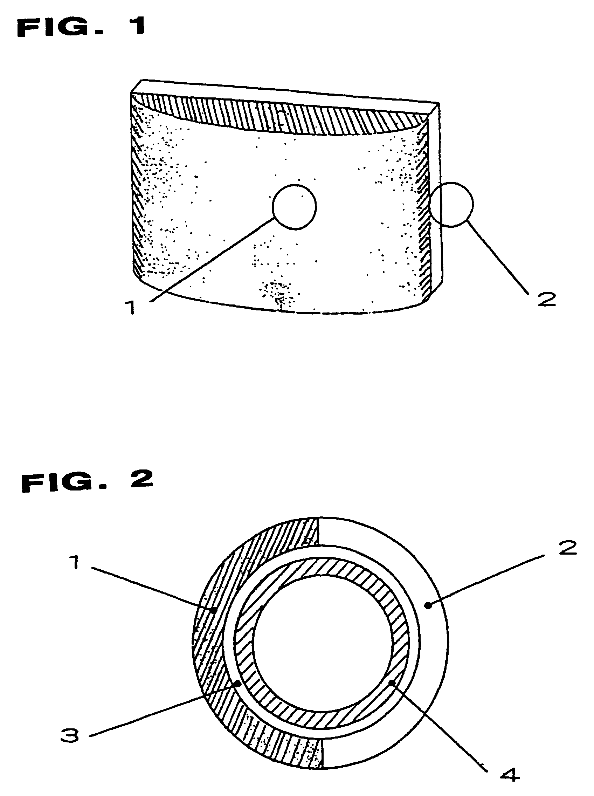

Further, shown are a perspective drawing of the appearance of the product in Fig. 1 and a cross section showing the parison material formation in Fig. 2. In Fig. 1 and Fig. 2, 1 represents the front side outer layer comprising PMMA; 2 represents the back side outer layer comprising ABS; 3 represents the intermediate layer comprising ABS; and 4 represents the inner layer comprising a scrap (PMMA/ABS).

### Example 5

Selected were an MS resin ( 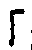 Esthylene MS300 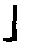 manufactured by Nippon Steel Chemical Co., Ltd.; Rockwell hardness in L scale: 97) as a front side outer layer resin, an HIPS resin ( 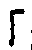 Esthylene XL1 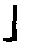 manufactured by Nippon Steel Chemical Co., Ltd.; Rockwell hardness in L scale: 65) as back side outer layer and intermediate layer resins and a crushed resin (MS/HIPS; Rockwell hardness in L scale: 79) of scraps produced in molding in Example 2 as an inner layer resin to carry out multilayer blow molding in the same manner as in Example 1.

The molding result is shown in Table 3.

### Comparative Example 1

Selected were an HIPS resin ( 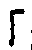 HT-945 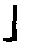 manufactured by Mitsubishi Chemicals Corporation; Rockwell hardness in L scale: 65) as an outer layer resin and an ABS resin ( 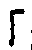 Cycolac EX270 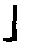 manufactured by Ube Cycon, Ltd.; Rockwell hardness in L scale: 77), which has a poor miscibility with the outer layer resin, as an inner layer resin to carry out multilayer blow molding in the same manner as in Example 1.

The molding result is shown in Table 3.

### Comparative Example 2

Selected were an ABS resin ( 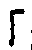 Cycolac EX270 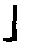 manufactured by Ube Cycon, Ltd.; Rockwell hardness in L scale: 77) as an outer layer resin, an HIPS resin ( 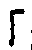 HT-945 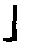 manufactured by Mitsubishi Chemicals Corporation; Rockwell hardness in L scale: 65), which has a poor miscibility with the outer layer resin, as back side outer layer and intermediate layer resins and a crashed resin (HIPS/ABS resins; Rockwell hardness in L scale: 68) of scraps produced in molding in Comparative Example 1 as an inner layer resin to carry out multilayer blow molding in the same manner as in Example 1.

The molding result is shown in Table 3.

### Comparative Example 3

Selected were an ABS resin ( 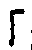 Cycolac EX270 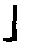 manufactured by Ube Cycon, Ltd.; Rockwell hardness in L scale: 77) as a front side outer layer resin, a PMMA resin ( 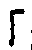 Sumipex K503 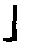 manufactured by Sumitomo Chemical Co., Ltd.; Rockwell hardness in L scale: 97) as a back side outer layer and an AES resin ( 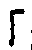 Cycolac SE40 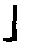 manufactured by Ube Cycon, Ltd.; Rockwell hardness in L scale: 70) as an inner layer resin to carry out multilayer blow molding in the same manner as in Example 1.

The molding result is shown in Table 3.

**Table 2**

| Example | Material Formation | | | |
|---|---|---|---|---|
| | Outer layer (front) | Outer layer (back) | Intermediate layer | Inner layer |
| 1 | PMMA | - | - | ABS |
| 2 | MS | - | - | HIPS |
| 3 | PMMA | ABS | - | AES |
| 4 | PMMA | ABS | ABS | Scrap |
| 5 | MS | HIPS | HIPS | Scrap |

| Comparative Example | | | | |
|---|---|---|---|---|
| 1 | HIPS | - | - | ABS |
| 2 | ABS | HIPS | HIPS | Scrap |
| 3 | ABS | PMMA | - | ABS |

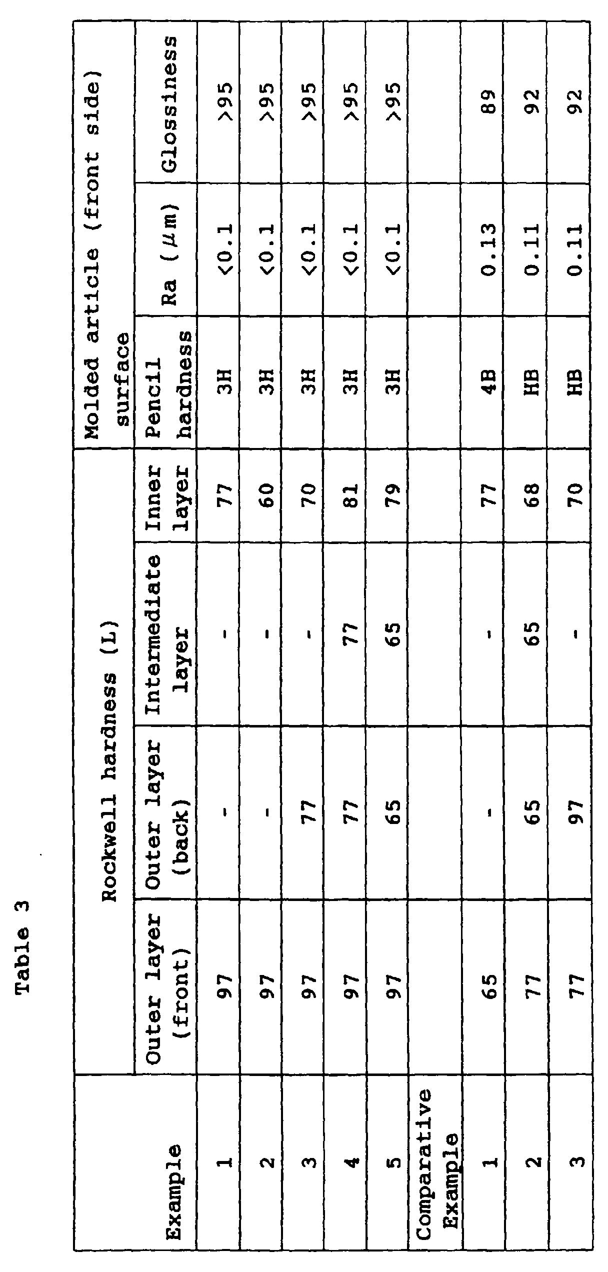

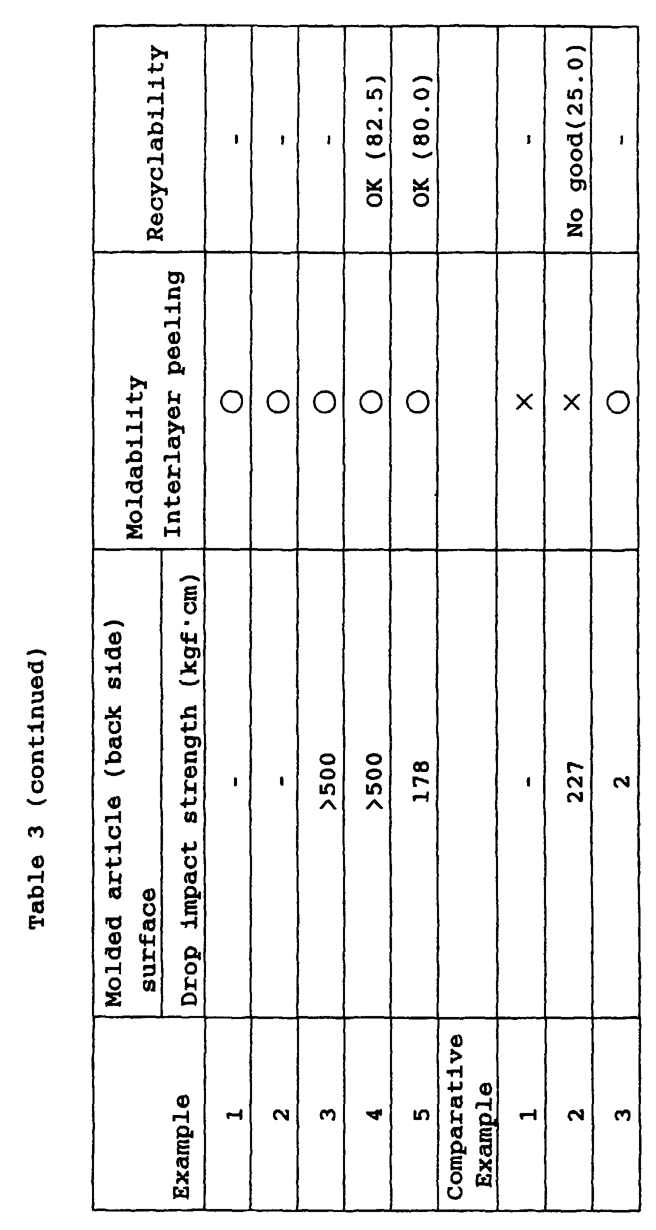

### Industrial Applicability

According to the present invention, in multilayer blow molding using plural resins having deferent Rockwell hardnesses, a combination of an outer layer resin having a large Rockwell hardness with an inner layer resin having a small Rockwell hardness makes it possible to provide a double wall product which is paintless but excellent in abrasion resistance, surface evenness and weatherability and has an excellent balance of rigidity with impact resistance as a structural member and which makes it possible to reuse scraps produced in the production process and the recycled resins for the products, that is, sufficiently meets a closed loop recycle. Accordingly, it is expected to be applied to wide fields such as automobiles, household electric appliances, OA instruments and the like.

## Claims

1. A multilayer blow molded article comprising at least two or more layers, wherein a resin constituting an outermost layer has a larger Rockwell hardness (based on ASTM-D785 or JIS-K7202) than that of a resin constituting an inner layer, and the outer surface thereof satisfies at least one of the surface characteristics of a surface roughness of 0.2 µm or less defined by a center line-average roughness (Ra) of JIS-B0601 and a 60° specular glossiness of 60 % or more defined by JIS-K7105.

2. The multilayer blow molded article as described in claim 1, wherein the resin constituting the outermost layer is divided into two kinds of different resins at a parting surface of a mold, and a resin constituting a front side outermost layer thereof has a larger Rockwell hardness than that of a resin constituting a back side outermost layer.

3. The multilayer blow molded article as described in claim 1 or 2, wherein the resin having a larger Rockwell hardness is a resin selected from methacryl resins, copolymers comprising methyl methacrylate as one constitutional component, acryl resins and copolymers comprising acrylonitrile as one constitutional component, and the resin having a smaller Rockwell hardness is a resin selected from ABS resins, AES resins, HIPS resins and analogues thereof.

4. The multilayer blow molded article as described in claim 1 or 2, wherein the multilayer blow molded article comprises at least three or more layers and a resin constituting an outermost layer is a transparent thermoplastic resin; and a resin constituting an intermediate layer is a thermoplastic resin which is colored and/or contains various additives and which has a good miscibility with said transparent thermoplastic resin.

5. The multilayer blow molded article as described in claim 1 or 2, wherein the multilayer blow molded article comprises at least three or more layers and the resin constituting the outermost layer is a transparent thermoplastic resin; the resin constituting the intermediate layer is a thermoplastic resin which is colored and/or contains various additives and which has a good miscibility with said transparent thermoplastic resin; and a resin constituting at least one layer of the intermediate layer and the inner layer excluding the outermost layer is a scrapped resin produced in molding or a recycled resin of said article.
